# EUROPÄISCHE PATENTSCHRIFT

(11) **EP 2 248 679 B1**
(45) Veröffentlichungstag und Bekanntmachung des Hinweises auf die Patenterteilung: **20.06.2012**
(21) Anmeldenummer: 10170999.6
(22) Anmeldetag: 20.04.2006
(51) Int. Cl.: F16D 3/22

(54) **Radlagergelenkeinheit**
Wheel bearing joint unit
Unite d'articulation de roulement de roue

(30) Priorität: 20.04.2005 DE 102005018126
(43) Veröffentlichungstag der Anmeldung: 10.11.2010
(62) Teilanmeldung aus: 06722803.1
(73) Patentinhaber: Schaeffler Technologies AG & Co. KG, 91074 Herzogenaurach (DE)
(72) Erfinder: Langer, Roland, 97523, Schwanfeld (DE); Masur, Ernst, 97508, Untereuerheim (DE); Niebling, Peter, 97688, Bad Kissingen (DE); Füller, Benno, 97753, Karlstadt (DE); Heiß, Ralf, 97422, Schweinfurt (DE)

(56) Entgegenhaltungen:
- DE-A1- 3 116 775
- DE-A1- 3 219 747
- DE-A1- 3 636 243
- US-A- 6 146 022

## Beschreibung

### Gebiet der Erfindung

Radlagergelenkeinheit mit zumindest einem auf einer Nabe der Radlagergelenkeinheit sitzenden Innenring, wobei der Innenring durch einen aus der Nabe umgeformten Bund axial auf der Nabe gehalten ist und dabei der Bund eine Verzahnung im Eingriff mit einer entsprechenden Gegenverzahnung an einem Gelenkbauteil aufweist und wobei die Verzahnung und die Gegenverzahnung mittels wenigstens eines sich über einen Kopf an der Nabe abstützenden und in ein Gewinde am Gelenkbauteil eingreifenden Schraubelementes gegeneinander verspannt sind.

### Hintergrund der Erfindung

Eine derartige Radlagergelenkeinheit ist in DE 36 36 243 A1 beschrieben. Das Schraubelement ist in der Regel ein Bolzen mit einem Kopf und mit einem Gewinde an einem Schaft. Der Kopf des Bolzens liegt verschraubt mit einer in der Regel vertikalen planen Anlagefläche an einer entsprechend vertikalen planen Stützfläche der Nabe flach an. Das Gelenkbauteil ist zum Beispiel die Glocke eines Gleichlaufgelenkes. Im Boden des Gelenkbauteils oder in einem entsprechenden Ansatz des Gelenkbauteils ist ein Innengewinde ausgebildet.

Bei der Montage der Einheit wird der Bolzen mittels des Schaftes durch ein entsprechendes Durchgangsloch in der Nabe geführt und in das Innengewinde eingeschraubt. Die Verbindung über die Verzahnungen wird durch das Verschrauben der Elemente in der Regel axial hoch vorgespannt. Die hohen Kräfte führen zu Verformungen in der Schraubverbindung.

So verformt sich der Boden des Gelenkbauteils in Richtung des Kopfes des Schraubelements. Die Verformungen am Gelenkbauteil beeinflussen die Lage und Form des Gelenkbauteils u.U. nachteilig. Plastische oder elastische Verformungen am Gewinde oder an der Umgebung des Gewindes übertragen sich auf die Verzahnung und beeinflussen den Eingriff nachteilig.

Beim Verschrauben zieht sich der Kopf des Bolzens axial in Richtung des Gewindes in das Durchgangsloch ein. Die plane Anlagefläche des Bolzens an der Stützfläche "tellert" auf und hebt von der Stützfläche an dem Flansch ab. Der Bolzen liegt an der Fase oder Kante an, die die Stützfläche zum Durchgangsloch begrenzt. Dadurch berühren sich die Nabe und der Kopf nur noch über Kantenberührung. Der Kopf wird sich um so mehr einziehen umso größer der radiale Abstand zwischen dem Schaft und der Innenwand des Durchgangsloches ist. Ungleichmäßige Verteilungen von Spannungen im Material der Schraubverbindung und deren Umgebung können zum Nachlassen der axialen Vorspannung und zu schädlichen Spannungsspitzen in der Verbindung führen. Schmutz und Wasser gelangen in den Ringkeil zwischen Anlagefläche und Stützfläche.

### Zusammenfassung der Erfindung

Die Aufgabe der Erfindung ist es daher, eine Radlagergelenkeinheit zu schaffen mit der die zuvor genannten Nachteile beseitigt sind.

Die Aufgabe der Erfindung wird durch die Merkmale des unabhängigen Anspruchs 1 gelöst, der die Gestaltung der Anlage des Schraubelements an der Nabe oder an wenigstens einem zwischen dem Kopf und der Nabe anliegenden Zwischenelement betrifft.

Die starre Struktur des Gelenkbauteils ist radial zwischen dem Gewinde und dem Teil des Gelenkbauteils, an dem die Verzahnung, beispielsweise eine Schräg- oder Stirnverzahnung ausgebildet ist, mittels einer Nut unterbrochen. Die Nut erstreckt sich aus Richtung des Kopfes axial in das Gelenkbauteil. Die Verzahnung und zumindest der Teil des Gelenkbauteils sind radial durch den Luftspalt der Nut voneinander getrennt und gehen erst am axialen Ende der Nut in das Material des Gelenkbauteils über.

Die Verzahnung ist somit von dem Gewinde gegen die stoffliche Übertragung von elastischen und/oder plastischen Verformungen entkoppelt. Verformungen im Material des Abschnittes mit dem Gewinde können sich aufgrund der radialen Trennung von Gewinde und Verzahnung nicht oder kaum bis in die Verzahnung fortsetzen. Dazu weist das Gelenkbauteil je nach Anzahl der verwendeten Schraubelemente einen oder mehrere Ansätze auf, in denen wahlweise eines oder mehrere der Gewinde ausgebildet sind. Die Ansätze sind vorzugsweise einteilig mit dem Gelenkbauteil ausgebildet und stehen an dem Gelenkbauteil axial in Richtung des Kopfes des jeweiligen Schraubelementes hervor. In die gleiche axiale Richtung steht oder stehen Ansätze aus dem Gelenkteil hervor, die zumindest Bestandteile der Gegenverzahnung für den Eingriff in die Verzahnung an der Nabe aufweisen.

Die Anordnung ist sehr kompakt und beansprucht axial wenig Bauraum, wenn der erste Ansatz mit dem Innengewinde axial zumindest soweit in die Nabe eintaucht, dass zumindest das Gewinde radial von der Verzahnung der Nabe umgeben ist. Das Durchgangsloch weist in diesem Fall durchgängig einen dafür geeigneten großen Durchmesser auf oder ist in dem Bereich, in den der Ansatz axial eintaucht, radial erweitert.

Der erste Ansatz ist vorzugsweise ringförmig rotationssymmetrisch zur Rotationsachse der Radlagergelenkeinheit ausgebildet. Eine Ausgestaltung sieht vor, dass der erste Ansatz radial außen zumindest teilweise durch die Außenmantelfläche eines Kegelstumpfes begrenzt ist. Die Spannungsverteilung aus axialer Vorspannung ist so in dem Ansatz optimiert.

Dabei kann der erste Ansatz und der zweite Ansatz an dem Gelenkbauteil gemeinsam in eine Hohlkehle übergehen, die am Ende der ringförmigen Axialnut ausgebildet ist.. Die Hohlkehle ist bevorzugt großzügig mit Radien verrundet.

Erfindungsgemäß ist vorgesehen, dass der Kopf des Schraubelements axial über wenigstens eine zur Rotationsachse der Radlagergelenkeinheit geneigte Fläche vorgespannt ist. Weiter weist die Nabe/das Zwischenelement - das Zwischenelement beispielsweise in Form einer Scheibe - oder der Kopf des Schraubelements eine Stützfläche/Anlagefläche in Form einer Einzugsfläche auf, die - abweichend von der vertikalen Lage - der Rotationsachse der Radlagergelenkeinheit zugewandt ist. Die ringförmig ausgebildete Fläche ist zu einer vertikalen Ebene geneigt oder läuft aus dieser gekrümmt heraus. Die vertikale Ebene verläuft im Kontakt zwischen Kopf und Stützfläche/Anlagefläche. Vorzugsweise ist die Stützfläche/Anlagefläche durch die Innenmantelfläche/Außenmantelfläche eines Innenkegelstumpfes/Außenkegelstumpfes beschrieben und von dem stirnseitigen Rand aus in Richtung des Gewindes in das Durchgangsloch eingezogen. Alternativ sind sowohl die Anlagefläche flanschseitig als auch die Stützfläche kopfseitig mit derartigen konischen Ringflächen versehen und korrespondieren miteinander.

In dem Fall, in dem die Stützfläche konisch ausgebildet ist, ist die Anlagefläche vertikal ausgerichtet oder alternativ im Gegensinn zur Stützfläche geneigt. Dabei ist die Anlagefläche axial gegen die zur Rotationsachse der Radlagergelenkeinheit geneigte Stützfläche vorgespannt und steht anfangs bei geringer axialer Vorspannung mit dieser nur in Kantenberührung. Mit zunehmendem Anzugsmoment wird der Schraubenkopf in das Durchgangsloch eingezogen. Dabei "tellert" die Anlagefläche und schmiegt sich an die Stützfläche an. Die optimale Anlage im Betrieb der Radlagergelenkeinheit ist abgesichert.

In dem Fall, in dem die Anlagefläche konisch ausgebildet ist, ist die Stützfläche vertikal ausgerichtet oder alternativ im Gegensinn zur Anlagefläche geneigt. Dabei ist die Stützfläche axial gegen die Rotationsachse geneigte Anlagefläche vorgespannt und steht anfangs bei geringer axialer Vorspannung mit dieser nur in Kantenberührung. Mit zunehmenden Moment wird der Schraubenkopf in das Durchgangsloch eingezogen, wobei sich die Konturen flanschseitig und kopfseitig aneinander anschmiegen.

### Beschreibung der Zeichnungen

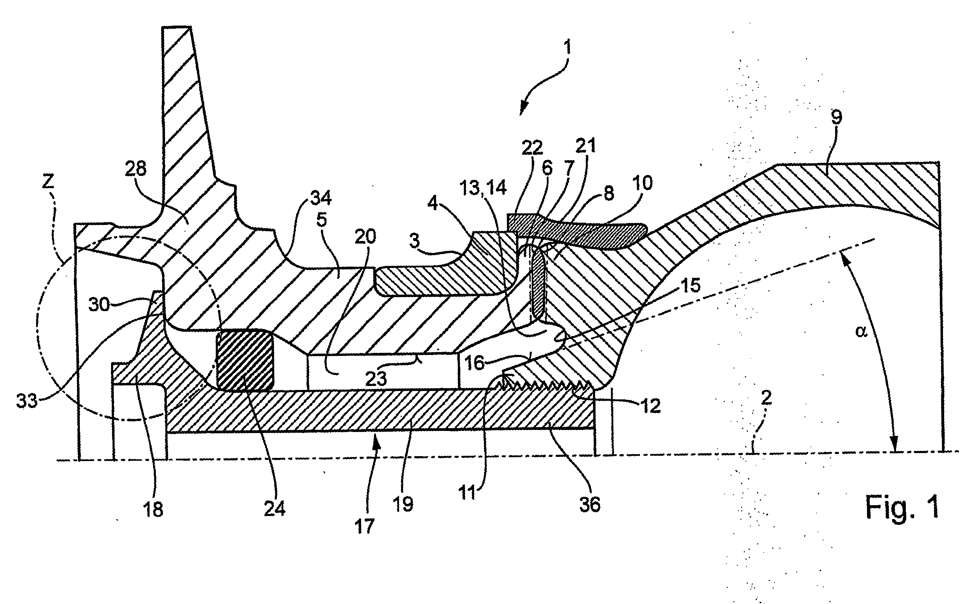

Die Erfindung ist nachfolgend anhand von Ausführungsbeispielen näher erläutert. Figur 1 zeigt einen Teilschnitt durch ein Ausführungsbeispiel einer Radlagergelenkeinheit 1 längs entlang der Rotationsachse 2 der Radlagergelenkeinheit 1. Die Radlagergelenkeinheit 1 weist zwei Laufbahnen 3 und 34 für nicht dargestellte Reihen Wälzkörper auf. Eine Laufbahn 3 ist an einem Innenring 4 ausgebildet. Der Innenring 4 sitzt radial auf einer Nabe 5 der Radlagereinheit 1. Der Innenring 4 ist mittels eines Bundes 6 axial auf der Nabe 5 gehalten. An dem Bund 6 ist eine nicht näher beschriebene Stirnverzahnung 7 ausgebildet. Die Stirnverzahnung 7 greift in eine Gegenverzahnung 8 an einem Gelenkbauteil 9 in Form einer Gelenkglocke ein. Die Gegenverzahnung 8 ist an einem Ansatz 10 ausgebildet, der axial aus der Gelenkglocke hervorsteht. An dem Gelenkbauteil 9 ist ein weiterer Ansatz 11 mit Innengewinde 12 ausgebildet.

Beide Ansätze 10 und 11 sind ringförmig ausgebildet und rotationssymmetrisch. Ansatz 10 mit der Gegenverzahnung 8 umgibt Ansatz 11 und ist an der Gegenverzahnung 8 vom Ansatz 11 radial durch einen Luftspalt 13 getrennt. Der Luftspalt 13 ist in einer Axialnut 14 ausgebildet. Die Axialnut 14 ist in einer Kehle 15 mit einem Radius verrundet.

Der Ansatz 11 weist eine außenkonische Kontur 16 auf, die um den spitzen Winkel α zu der Rotationsachse 2 geneigt ist. In den Ansatz 11 ist ein Schraubelement 17 in Form eines Bolzens 36 eingeschraubt. Die Nabe 5 und das Gelenkbauteil 9 sind mittels des Schraubelements 17 in dem Innengewinde 12 axial verspannt. Dazu liegt der Bolzen 36 mit dem Kopf 18 stirnseitig in diesem Falle direkt an der Nabe 5 an und durchdringt mit dem Schaft 19 das Durchgangsloch 20 axial bis in den Ansatz 11.

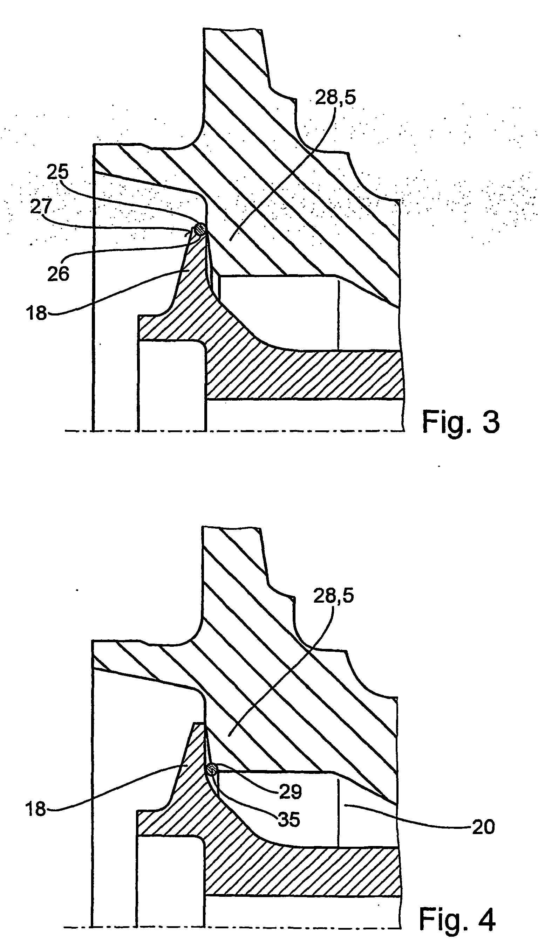

Die Fuge 21 zwischen dem Gelenkbauteil 9 und dem Bund 6 ist radial außen mittels eines Abdeckringes 22 aus Kunststoff verdeckt. Der Abdeckring 22 verhindert das Eindringen von Nässe und Schmutz in die Fuge 21. Alternativ oder gleichzeitig ist in die Fuge ein elastisches oder aushärtendes Dichtmittel, beispielsweise eine Dichtpaste bei der Montage, eingebracht. In dem Durchgangsloch 20 ist radial zwischen dem Schaft 19 und der Innenwand 23 ein Dichtring 24 eingeklemmt. In den Figuren 3 und 4 sind weitere Ausgestaltungen von Abdichtungen der Schraubverbindung beschrieben. Die Figuren 3 und 4 zeigen alternative Gestaltungen des Details Z aus Figur 1, vergrößert und nicht maßstäblich. Figur 3 zeigt einen O - Ring 25 in einer Klemmnut 26 zwischen dem Rand 27 des Kopfes 18 und dem Flansch 28 an der Nabe 5. In der Darstellung nach Figur 4 ist ein O - Ring 35 axial zwischen dem Kopf 18 und der Kante 29 zum Durchgangsloch 20 eingeklemmt. Denkbar ist auch, dass in der Schraubverbindung zwischen den Gewinden elastische Dichtelemente wie O - Ringe oder Dichtpasten integriert sind und dass im Kontakt Kopf - Flansch Dichtpasten oder andere Dichtmittel eingebracht sind.

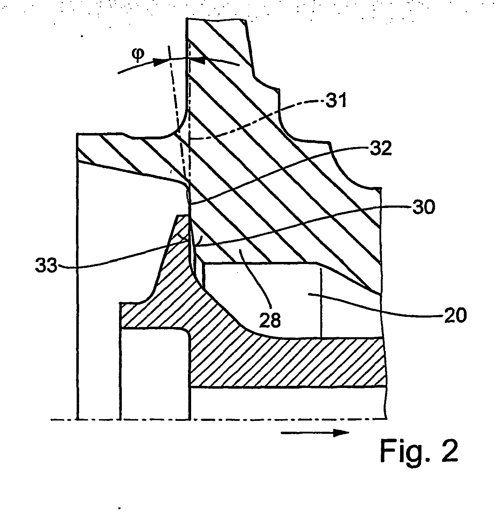

Figur 2 zeigt das Detail Z aus Figur 1 vergrößert und nicht maßstäblich. Eine stirnseitige Fläche 30, in diesem Fall die Stützfläche 30 ist um den Winkel ϕ zu einer gedachten Vertikalebene 31 entgegen dem Uhrzeigersinn geneigt und so ausgehend von der Stirnseite 32 des Flansches 28 in die mit dem Pfeil gekennzeichnete axiale Richtung zum Innengewinde 12 hin in das Durchgangsloch 20 eingezogen gestaltet. Die Anlagefläche 33 am Kopf 18 liegt in diesem Falle in der Vertikalebene 31. Denkbar ist auch, dass die Anlagefläche geneigt ausgeführt ist und die Stützfläche in der Vertikalebene liegt.

Im Falle hoher axialer Vorspannung wird sich die Anlagefläche 33 "tellern" d.h. die Anlagefläche 33 wird an ihrem kleinsten Durchmesser axial in Richtung des Pfeils in das Durchgangsloch 20 hinein gezogen. Die Anlagefläche 33 liegt bei axialer Vorspannung dann nicht mehr in der Vertikalebene 31 sondern ist annähernd um den Winkel ϕ zu dieser geneigt.

### Bezugszeichen

- 1: Radlagergelenkeinheit
- 2: Rotationsachse
- 3: Laufbahn
- 4: Innenring
- 5: Nabe
- 6: Bund
- 7: Verzahnung
- 8: Gegenverzahnung
- 9: Gelenkbauteil
- 10: Ansatz
- 11: Ansatz
- 12: Innengewinde
- 13: Luftspalt
- 14: Axialnut
- 15: Kehle
- 16: Kontur
- 17: Schraubelement
- 18: Kopf
- 19: Schaft
- 20: Durchgangsloch
- 21: Fuge
- 22: Abdeckring
- 23: Innenwand
- 24: Dichtring
- 25: O - Ring
- 26: Klemmnut
- 27: Rand
- 28: Flansch
- 29: Kante
- 30: Stützfläche
- 31: Vertikalebene
- 32: Stirnseite
- 33: Anlagefläche
- 34: Laufbahn
- 35: O - Ring
- 36: Bolzen

## Patentansprüche

1. Radlagergelenkeinheit (1) mit zumindest einem auf einer Nabe (5) der Radlagergelenkeinheit (1) sitzenden Innenring (4), wobei der Innenring (4) durch einen aus der Nabe (5) umgeformten Bund (6) axial auf der Nabe (5) gehalten ist und dabei der Bund (6) eine Verzahnung (7) im Eingriff mit einer entsprechenden Gegenverzahnung (8) an einem Gelenkbauteil (9) aufweist und wobei die Verzahnung (7) und die Gegenverzahnung (8) mittels wenigstens eines sich über einen Kopf (18) an der Nabe (5) abstützenden und in ein Gewinde (12) am Gelenkbauteil (9) eingreifenden Schraubelementes (17) gegeneinander verspannt sind, **dadurch gekennzeichnet, dass** der Kopf (18) axial über wenigstens eine zur Rotationsachse (2) der Radlagergelenkeinheit (1) geneigte Fläche (30) vorgespannt ist.

2. Radlagergelenkeinheit nach Anspruch 1, wobei die Fläche (30) innenkonisch ausgebildet ist.

3. Radlagergelenkeinheit nach Anspruch 2, wobei die Fläche (30) von radial außen nach radial innen in Richtung des Gewindes (12) eingezogen ist.

4. Radlagergelenkeinheit nach Anspruch 1, wobei die Fläche (30) eine Stützfläche an der Nabe (5) ist.

5. Radlagergelenkeinheit nach Anspruch 4, wobei im Kontakt zwischen Kopf (18) und Flansch (28) ein Dichtmittel (25, 35) eingebracht ist.

6. Radlagergelenkeinheit nach Anspruch 5, wobei das Dichtmittel eine Dichtpaste ist.

7. Radlagergelenkeinheit nach Anspruch 5, wobei das Dichtmittel (25) ein in einer Klemmnut (26) zwischen einem Rand (27) des Kopfes (18) und einem Flansch (28) an der Nabe (5) angeordneter erster O-Ring (25) ist.

8. Radlagergelenkeinheit nach Anspruch 5, wobei das Dichtmittel (25) ein axial zwischen dem Kopf (18) und einer zu einem Durchgangsloch (20) gehörigen Kante (29) der Nabe (5) eingeklemmter, zweiter O-Ring (35) ist.

9. Radlagergelenkeinheit nach einem der vorhergehenden Ansprüche, wobei in einem Durchgangsloch (20) radial zwischen einem Schaft (19) des Schraubenelementes (17) und einer Innenwand (23) der Nabe (5) ein Dichtring (24) eingeklemmt ist.

10. Radlagergelenkeinheit nach einem der vorhergehenden Ansprüche, wobei in einer Schraubverbindung zwischen einem Gewinde der Nabe (5) und einem Gewinde des Schraubelements (17) ein elastisches Dichtelement vorgesehen ist.

## Claims

1. Wheel bearing joint unit (1) having at least one inner ring (4) which is seated on a hub (5) of the wheel bearing joint unit (1), wherein the inner ring (4) is held axially on the hub (5) by a collar (6) formed out of the hub (5), and here, the collar (6) has a toothing (7) in engagement with a corresponding counterpart toothing (8) on a joint component (9), and wherein the toothing (7) and the counterpart toothing (8) are braced against one another by means of at least one screw element (17) which is supported via a head (18) on the hub (5) and which engages into a thread (12) on the joint part (9), **characterized in that** the head (18) is preloaded axially by means of at least one surface (30) which is inclined with respect to the axis of rotation (2) of the wheel bearing joint unit (1).

2. Wheel bearing joint unit according to Claim 1, wherein the surface (30) is formed in the manner of an internal cone.

3. Wheel bearing joint unit according to Claim 2, wherein the surface (30), from radially outside to radially inside, is drawn in in the direction of the thread (12).

4. Wheel bearing joint unit according to Claim 1, wherein the surface (30) is a support surface on the hub (5).

5. Wheel bearing joint unit according to Claim 4, wherein a sealing means (25, 35) is inserted in the area of contact between the head (18) and the flange (28).

6. Wheel bearing joint unit according to Claim 5, wherein the sealing means is a sealing paste.

7. Wheel bearing joint unit according to Claim 5, wherein the sealing means (25) is a first O ring (25) arranged in a clamping groove (26) between an edge (27) of the head (18) and a flange (28) on the hub (5).

8. Wheel bearing joint unit according to Claim 5, wherein the sealing means (25) is a second O ring (35) clamped axially between the head (18) and an edge (29), which is associated with a passage hole (20), of the hub (5).

9. Wheel bearing joint unit according to one of the preceding claims, wherein, in a passage hole (20), a sealing ring (24) is clamped radially between a shank (19) of the screw element (17) and an inner wall (23) of the hub (5).

10. Wheel bearing joint unit according to one of the preceding claims, wherein an elastic sealing element is provided in a screw connection between a thread of the hub (5) and a thread of the screw element (17).

## Revendications

1. Unité d'articulation de roulement de roue (1) comprenant au moins une bague interne (4) reposant sur un moyeu (5) de l'unité d'articulation de roulement de roue (1), la bague interne (4) étant maintenue axialement sur le moyeu (5) par un épaulement (6) façonné à partir du moyeu (5) et l'épaulement (6) présentant en l'occurrence une denture (7) en prise avec une contre-denture correspondante (8) sur une pièce d'articulation (9), et la denture (7) et la contre-denture (8) étant serrées l'une contre l'autre au moyen d'au moins un élément de vissage (17) s'appuyant sur le moyeu (5) par l'intermédiaire d'une tête (18) et venant en prise dans un filetage (12) sur la pièce d'articulation (9), **caractérisée en ce que** la tête (18) est précontrainte axialement par l'intermédiaire d'au moins une surface (30) inclinée par rapport à l'axe de rotation (2) de l'unité d'articulation de roulement de roue (1).

2. Unité d'articulation de roulement de roue selon la revendication 1, dans laquelle la surface (30) est réalisée sous forme conique à l'intérieur.

3. Unité d'articulation de roulement de roue selon la revendication 2, dans laquelle la surface (30) est tirée dans la direction du filetage (12) depuis une position radialement extérieure vers une position radialement intérieure.

4. Unité d'articulation de roulement de roue selon la revendication 1, dans laquelle la surface (30) est une surface d'appui sur le moyeu (5).

5. Unité d'articulation de roulement de roue selon la revendication 4, dans laquelle un moyen d'étanchéité (25, 35) est placé en contact entre la tête (18) et une bride (28).

6. Unité d'articulation de roulement de roue selon la revendication 5, dans laquelle le moyen d'étanchéité est une pâte d'étanchéité.

7. Unité d'articulation de roulement de roue selon la revendication 5, dans laquelle le moyen d'étanchéité (25) est un premier joint torique (25) disposé sur le moyeu (5) dans une rainure de serrage (26) entre un bord (27) de la tête (18) et une bride (28).

8. Unité d'articulation de roulement de roue selon la revendication 5, dans laquelle le moyen d'étanchéité (25) est un deuxième joint torique (35) serré axialement entre la tête (18) et une arête (29) du moyeu (5) appartenant à un trou traversant (20).

9. Unité d'articulation de roulement de roue selon l'une quelconque des revendications précédentes, dans laquelle une bague d'étanchéité (24) est serrée radialement dans un trou traversant (20) entre une tige (19) de l'élément de vissage (17) et une paroi intérieure (23) du moyeu (5).

10. Unité d'articulation de roulement de roue selon l'une quelconque des revendications précédentes, dans laquelle un élément d'étanchéité élastique est prévu dans une connexion vissée entre un filetage du moyeu (5) et un filetage de l'élément de vissage (17).
